# EUROPEAN PATENT SPECIFICATION

(11) **EP 2 222 466 B1**
(45) Date of publication and mention of the grant of the patent: **06.08.2014**
(21) Application number: 08789685.8
(22) Date of filing: 17.09.2008
(51) Int. Cl.: C08J 7/12, B32B 37/00, A61F 13/00, D04H 3/16

(54) **ANTISTATIC BREATHABLE NONWOVEN LAMINATE HAVING IMPROVED BARRIER PROPERTIES**
ANTISTATISCHES, ATMUNGSAKTIVES VLIESSTOFFLAMINAT MIT VERBESSERTEN SPERREIGENSCHAFTEN
STRATIFIÉ NON-TISSÉ RESPIRANT ANTISTATIQUE POSSÉDANT DES PROPRIÉTÉS BARRIÈRES AMÉLIORÉES

(30) Priority: 14.12.2007 US 956794
(43) Date of publication of application: 01.09.2010
(73) Proprietor: KIMBERLY-CLARK WORLDWIDE, INC., Neenah, WI 54956 (US)
(72) Inventor: YAHIAOUI, Ali, Roswell Georgia 30075 (US); SPENCER, Anthony, Steve, Woodstock Georgia 30189 (US)
(74) Representative: Davies, Christopher Robert
(86) International application number: PCT/IB2008/053786
(87) International publication number: WO 2009/077889

(56) References cited:
- WO-A1-2005/019339
- WO-A2-02/076576
- JP-A- 4 174 782
- JP-A- 2000 080 568
- KR-A- 20050 014 393
- US-A- 5 178 932
- US-A- 5 614 306
- US-A1- 2004 265 533
- US-A1- 2005 133 151

## Description

### Background of the Invention

Nonwoven fabric laminates are useful for a wide variety of applications, such as in wipers, towels, industrial garments, medical garments, medical drapes, sterile wraps, etc. It is not always possible, however, to produce a nonwoven fabric having all desired attributes for a given application. As a result, it is often necessary to treat nonwoven fabrics by various means to impart desired properties. For example, in some applications, barrier properties to water and oil penetration are desired, along with antistatic properties.

Unfortunately, treatments for barrier properties and treatments for antistatic properties are typically detrimental to each other. For example, the presence of an antistatic agent on the nonwoven fabric negatively influences liquid barrier properties of the finished web, as measured by hydrostatic head testing. It is currently believed by the present inventors that the hydrophilic properties of common antistatic agents currently available results in a degradation of the barrier properties of the nonwoven web.

Accordingly, there is a need for a method of treating a nonwoven fabric with an antistatic agent that does not negatively affect the liquid repellent properties of the fabric and vice versa. There is also a need for a base nonwoven material that exhibits a good balance between hydrophobicity and breathability, such that the hydrophobicity of the base nonwoven web can be further enhanced without detrimental effect on its breathability and anti-static properties.

KR 2005 0014393A discloses a polypropylene multilayer nonwoven fabric with excellent water repellency, oil repellency, antistatic property and air permeability and the method of its construction.

WO 2005/019339A1 discloses an oil and water-repellant composition, and a method of preparation thereof, which comprises at least one polymer, at least one water-dispersible polyester and water.

WO 02/076576A2 discloses a vapor phase treated electret filter media including an additive or mixture thereof to enhance the charge stability of the media and the method of preparing it.

JP 2000 080568A discloses the preparation of a nylon fabric having both electrostatic property and water repellency.

JP 4174782A discloses a method of obtaining a woolen textile product of a deep color tone which is not conventionally available.

### Summary of the Invention

According to the present invention, there is provided a method of improving the antistatic properties of a nonwoven web without adversely affecting the alcohol repellant properties of the web as claimed in claim 1.

One embodiment of the present invention is generally directed to a method of increasing the alcohol repellency of a nonwoven web without adversely affecting the antistatic and breathable properties of the web. The method includes combining an antistatic agent with a thermoplastic polymer to form a thermoplastic mixture wherein the antistatic agent is selected from organic phosphate esters, inorganic salts, quaternary amines, polyethylene glycols, or a salt of an alkyl sulfonate. The antistatic agent can be provided in a high melt flow carrier resin (e.g., having a melt flow rating of greater than about 10 g/10 minutes, such as greater than about 30g/10 minutes), such as a homopolymer of polypropylene. In one particular embodiment, the high melt flow carrier resin can include a metallocene catalyzed homopolymer of polypropylene. Also, a viscosity modifying polymer can be combined with the antistatic agent and the thermoplastic polymer to form the thermoplastic mixture. The viscosity modifying polymer can include a polybutene ethylene copolymer, and may further include free organic peroxide additives.

A spunbond web of continuous filaments is formed from the thermoplastic mixture. In one particular embodiment, the spunbond web is laminated to at least one other nonwoven web (e.g., a meltblown web). A high energy treatment (e.g., plasma treatment, corona treatment, etc) is applied to a surface of the spunbond web. Then, a fluorinated agent (e.g., fluoroacrylate monomer) is grafted to the surface of the spunbond web utilizing a high energy process in a vacuum chamber, such as a monomer deposition process. The monomer deposition process can generally include evaporating a liquid fluorinated agent in a vacuum chamber, followed by depositing the fluorinated agent gas on a surface of the spunbond web, and exposing the surface to a radiation source (e.g., electron beam radiation, gamma ray radiation, ultraviolet radiation, etc.).

The present disclosure is also directed to a spunbond web having high antistatic properties and high alcohol repellency properties. The spunbond web can be laminated to other webs to form a nonwoven laminate (e.g., SM, SMS, SMMS, etc.). The spunbond web is made of continuous fibers of a thermoplastic polymeric material and an integral antistatic agent wherein the antistatic agent is selected from organic phosphate esters, inorganic salts, quaternary amines, polyethylene glycols, or a salt of an alkyl sulfonate. A fluorinated agent is grafted to the continuous fibers. The spunbond web has an alcohol repellency of greater than 70%, a surface resistivity of less than about 10¹⁰ ohms per square, a hydrostatic head value of greater than 30 mbars, and passes a 50% static decay test.

Other features and aspects of the present invention are discussed in greater detail below.

### Brief Description of the Drawings

A full and enabling disclosure of the present invention, including the best mode thereof, directed to one of ordinary skill in the art, is set forth more particularly in the remainder of the specification, which makes reference to the appended figures in which:

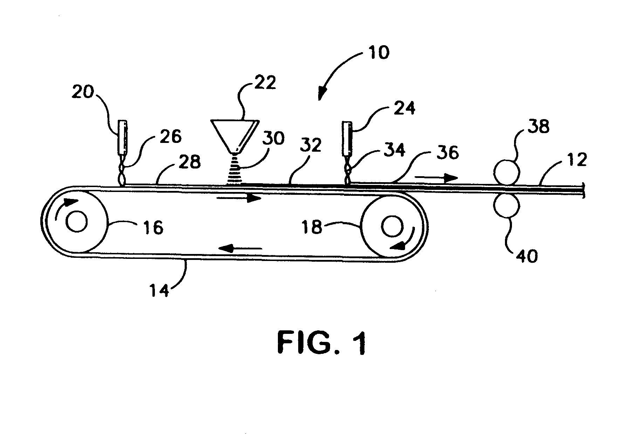

Fig. 1 is a schematic illustration of a process that may be used in one embodiment of the present invention to form a nonwoven laminate.

Repeat use of reference characters in the present specification and drawing is intended to represent same or analogous features or elements of the invention.

### Detailed Description of Representative Embodiments

Reference now will be made in detail to various embodiments of the invention, one or more examples of which are set forth below. Each example is provided by way of explanation of the invention, not limitation of the invention. In fact, it will be apparent to those skilled in the art that various modifications and variations may be made in the present invention without departing from the scope of the invention. For instance, features illustrated or described as part of one embodiment, may be used on another embodiment to yield a still further embodiment. Thus, it is intended that the present invention covers such modifications and variations as come within the scope of the appended claims and their equivalents.

### Definitions

As used herein, the term "fibers" refer to elongated extrudates formed by passing a polymer through a forming orifice such as a die. Unless noted otherwise, the term "fibers" includes discontinuous fibers having a definite length and substantially continuous filaments. Substantially filaments may, for instance, have a length much greater than their diameter, such as a length to diameter ratio ("aspect ratio") greater than about 15,000 to 1, and in some cases, greater than about 50,000 to 1.

As used herein, the term "monocomponent" refers to fibers formed one polymer. Of course, this does not exclude fibers to which additives have been added for color, anti-static properties, lubrication, hydrophilicity, liquid repellency, etc.

As used herein, the term "multicomponent" refers to fibers formed from at least two polymers (e.g., bicomponent fibers) that are extruded from separate extruders. The polymers are arranged in substantially constantly positioned distinct zones across the cross-section of the fibers. The components may be arranged in any desired configuration, such as sheath-core, side-by-side, pie, island-in-the-sea, and so forth. Various methods for forming multicomponent fibers are described in U.S. Patent Nos. 4,789,592 to Taniguchi et al. and U.S. Pat. No. 5,336,552 to Strack et al., 5,108,820 to Kaneko, et al., 4,795,668 to Kruege, et al., 5,382,400 to Pike, et al., 5,336,552 to Strack, et al., and 6,200,669 to Marmon, et al. Multicomponent fibers having various irregular shapes may also be formed, such as described in U.S. Patent. Nos. 5,277,976 to Hogle, et al., 5,162,074 to Hills, 5,466,410 to Hills, 5,069,970 to Largman, et al., and 5,057,368 to Largman, et al.

As used herein, the term "multiconstituent" refers to fibers formed from at least two polymers (e.g., biconstituent fibers) that are extruded from the same extruder. The polymers are not arranged in substantially constantly positioned distinct zones across the cross-section of the fibers. Various multiconstituent fibers are described in U.S. Patent No. 5,108,827 to Gessner.

As used herein, the term "nonwoven web" refers to a web having a structure of individual fibers that are randomly interlaid, not in an identifiable manner as in a knitted fabric. Nonwoven webs include, for example, meltblown webs, spunbond webs, carded webs, wet-laid webs, airlaid webs, coform webs, hydraulically entangled webs, etc. The basis weight of the nonwoven web may generally vary, but is typically from about 5 grams per square meter ("gsm") to 200 gsm, in some embodiments from about 10 gsm to about 150 gsm, and in some embodiments, from about 15 gsm to about 100 gsm.

As used herein, the term "meltblown" web or layer generally refers to a nonwoven web that is formed by a process in which a molten thermoplastic material is extruded through a plurality of fine, usually circular, die capillaries as molten fibers into converging high velocity gas (e.g. air) streams that attenuate the fibers of molten thermoplastic material to reduce their diameter, which may be to microfiber diameter. Thereafter, the meltblown fibers are carried by the high velocity gas stream and are deposited on a collecting surface to form a web of randomly dispersed meltblown fibers. Such a process is disclosed, for example, in U.S. Patent Nos. 3,849,241 to Butin, et al.; 4,307,143 to Meitner, et al.; and 4,707,398 to Wisneski, et al. Meltblown fibers may be substantially continuous or discontinuous, and are generally tacky when deposited onto a collecting surface.

As used herein, the term "spunbond" web or layer generally refers to a nonwoven web containing small diameter substantially continuous filaments. The filaments are formed by extruding a molten thermoplastic material from a plurality of fine, usually circular, capillaries of a spinnerette with the diameter of the extruded filaments then being rapidly reduced as by, for example, eductive drawing and/or other well-known spunbonding mechanisms. The production of spunbond webs is described and illustrated, for example, in U.S. Patent Nos. 4,340,563 to Appel, et al., 3,692,618 to Dorschner, et al., 3,802,817 to Matsuki, et al., 3,338,992 to Kinney, 3,341,394 to Kinney, 3,502,763 to Hartman, 3,502,538 to Levy, 3,542,615 to Dobo, et al., and 5,382,400 to Pike, et al. Spunbond filaments are generally not tacky when they are deposited onto a collecting surface. Spunbond filaments may sometimes have diameters less than about 40 micrometers, and are often between about 5 to about 20 micrometers.

### Test Methods

Hydrostatic Head: A measure of the liquid barrier properties of a fabric is the hydrostatic head test. The hydrostatic head test determines the height of water (in centimeters) which the fabric will support before a predetermined amount of liquid passes through. A fabric with a higher hydrostatic head reading indicates it has a greater barrier to liquid penetration than a fabric with a lower hydrostatic head. The hydrostatic head test is performed according to Federal Test Standard 191A, Method 5514.

The test is modified to include a screen support of standard synthetic fiber window screen material. The test head of a Textest FX-300 Hydrostatic Head Tester, available from Schmid Corporation, having offices in Spartanburg, S.C. was filled with purified water. The purified water was maintained at a temperature between 65° F. and 85° F. (between about 18.3° C. and 29.4° C.), which was within the range of normal ambient conditions (about 73° F. (about 23° C.) and about 50% relative humidity) at which this test was conducted. An 8 inch by 8 inch (about 20.3 cm by 20.3 cm) square sample of the test material was placed such that the test head reservoir was covered completely. The sample was subjected to a standardized water pressure, increased at a constant rate until leakage was observed on the outer surface of the sample material. Hydrostatic pressure resistance was measured at the first sign of leakage in three separate areas of the sample. This test was repeated for forty specimens of each sample material. The hydrostatic pressure resistance results for each specimen were averaged and recorded in millibars. Again, a higher value indicates greater resistance to water penetration and is desirable for barrier applications.

Alcohol: The alcohol repellency test is designed to measure the resistance of nonwoven fabrics to penetration by low surface tension liquids, such as alcohol/water solutions. Alcohol repellency was tested according to the test procedure described as follows. In this test, a fabric's resistance to penetration by low surface energy fluids is determined by placing 0.1 ml of a specified volume percentage of isopropyl alcohol (IPA) solution in several different locations on the surface of the fabric and leaving the specimen undisturbed for 5 minutes. In this test, 0.1 ml of serially diluted isopropyl alcohol and distilled water solutions, ranging from 60 volume percent to 100 volume percent in increments of 10 percent, are placed on a fabric sample arranged on a flat surface. After 5 minutes, the surface is visually inspected and the highest concentration retained by the fabric sample is noted. For example, if the minimum value is a 70% IPA solution, i.e. a 70% IPA solution is retained by the fabric but an 80% solution penetrates through the fabric to the underlying surface. The grading scale ranges from 0 to 5, with 0 indicating the IPA solution wets the fabric and 5 indicating maximum repellency. Unless stated otherwise, the percent alcohol (IPA) repellency reported indicates the maximum volume percent of IPA that could be added to water while still retaining a 5 rating on the scale at all points of the fabric tested. This procedure is a modification of INDA Standard Test No. IST 80.9-74 (R-82).

Air permeability was measured using procedure number STM 3801. The units are cubic feet per minute per square foot (cfm). In this process, porosity was measured using a Frazier air permeability tester. Porosity results were obtained by Frazier Porosity tests, ASTM Standard D737 "Air Permeability of Textile Fabrics," also Method 5450 Federal Test Methods Standard No. 191 A, except that the specimen size is 8 inches by 8 inches.

Surface Resistivity: The following describes the surface resistivity test method employed by the present invention. Measurements were made by the constant voltage method at an applied voltage of 100 V (+/- 5 V) according to EN 1149-1:2004 and ASTM D257-93, with a relative humidity of 25% (+/- 5%) at room temperature (i.e., 23° C +/- 2° C), where the reading is taken after 15 seconds.

Static Decay: The following describes the static or electrostatic decay test method employed in the present invention. This method has also been reported in U.S. Pat. No. 6,562,777, col. 10, lines 1-16. This test determines the electrostatic properties of material by measuring the time required dissipating a charge from the surface of the material. Except, as specifically noted, this test is performed in accord with INDA Standard Test Methods: IST 40.2 (95). Generally described, a 3.5 inch (8.89 cm) by 6.5 inch (16.51 cm) specimen is conditioned, including removal of any existing charge. The specimen is then placed in electrostatic decay testing equipment and charged to 5000 volts. Once the specimen has accepted the charge, the charging voltage is removed and the electrodes grounded. The time it takes for the sample to lose a pre-set amount of the charge (e.g. 50% or 90%) is recorded. The electrostatic decay times for the samples referenced herein were tested using calibrated static decay meter Model No. SDM 406C and 406D available from Electro-Tech Systems, Inc., of Glenside, Pa.

### Detailed Description

Generally speaking, the present invention is directed to a nonwoven laminate that has improved antistatic properties without negatively influencing the alcohol and oil barrier properties of the laminate. For example, according to the present invention, a nonwoven laminate can have the same, or substantially similar, barrier properties to both alcohol and oil, whether or not an antistatic agent is present in the web. As such, the present inventors have surprisingly discovered a method of adding an antistatic agent to a nonwoven laminate without negatively impacting its repellency properties to both alcohol and oil. Additionally, the nonwoven laminate can have the desired air permeability, while maintaining the desired barrier properties to alcohol and oil.

According to the present invention, an antistatic treatment can be integrally incorporated into the fibers of a spunbond layer (or layers) of the nonwoven laminate. The antistatic treatment is combined with thermoplastic material used to form the continuous filaments of the spunbond layer, for example by blending the antistatic treatment into the thermoplastic material. The antistatic treatment includes at least one antistatic agent provided in a carrier resin. Of course, other components can be included within the antistatic treatment, as desired.

The antistatic agent can be added to the thermoplastic material used to form the continuous filaments of the spunbond layer in an amount of about 0.1 % by weight to about 25% by weight, such as from about 0.5% by weight to about 10% by weight. In one particular embodiment, for instance, the antistatic agent can be added to the thermoplastic material used to form the continuous filaments of the spunbond layer in an amount of about 1 % by weight to about 5% by weight.

The antistatic agent included within the antistatic treatment additive can be any antistatic agent, so long as it is capable of withstanding the formation of the continuous filaments in the manufacture of the spunbond layer. As used herein, the term "antistatic agent" refers to a material or a mixture of two or more materials which aids in the dissipation of static charges from the surfaces of the fibers. Thus, an antistatic agent increases the electrical conductivity of the fibers, and, as a consequence, the electrical conductivity of the resulting nonwoven web. Some conventional antistatic agents are described in U.S. Patent Nos. 3,898,166 to Cooney; 4,115,605 to Hultman, et al.; and 5,001,015 to Havens.

Suitable antistatic agents are organic phosphate esters and inorganic salts (e.g., lithium nitrate). In one embodiment, for example, the antistatic agent is an alkyl phosphate ester. Commercially available examples of suitable alkyl phosphate esters include "ZELEC KC" from Stepan Chemical (mono- and disubstituted potassium n-butyl phosphate); "ALKANOL MP" from Stepan Chemical (mono- and disubstituted potassium n-propyl phosphate); "POLYFIX N" from Schill & Seilacher (mono- and disubstituted potassium i-butyl phosphate); "QUADRASTAT PBK" from Manufacturers Chemical (mono-and disubstituted potassium n-butyl phosphate); and "QUADRASTAT 1662" from Manufacturers Chemical (mono- and disubstituted potassium I-butyl phosphate). Other suitable antistatic agents are quaternary amines, inorganic salts (e.g., potassium polymetaphosphate, sodium chloride, etc.), and polyethylene glycols.

In one particular embodiment, the antistatic agent can be a salt of an alkyl sulfonate. For instance, the salt can include ions of alkali metals (e.g., sodium ions, potassium ions, etc.), alkaline earth metals (e.g., magnesium ions, calcium ions), as well as transition metal ions (e.g., zinc ions), and combinations thereof. The alkyl chain can also vary in length, and can include ... a lauryl chain. One particularly suitable antistatic agent is available under the name Chemstat PS101 from PCC Chemax, Inc. (Greenville, SC), which is available in a carrier resin from SCC under product codes, SCC 06SAM0988 (20% Chemstat PS101 in Valtec HH441, Basell Polyolefins Company, Wilmington, Del.) or 07SAM0192 (20% Chemstat PS101 in Exxon 3155).

In some embodiments, the antistatic agent can be provided in a high melt flow carrier resin. The high melt flow carrier resin may be configured to help blend the antistatic agent into the thermoplastic material used to form the continuous filaments of the spunbond layer. For instance, the high melt flow polymer can have a melting temperature of greater than about 150° C., and particularly greater than about 155° C. Additionally, in order to facilitate the formation of spunbond filaments, particularly continuous filaments in a melt spinning operation, the high melt flow polymer can have a melt flow rating of greater than about 30 g/10 minutes, such as from about 30 g/10 minutes to about 50 g/10 minutes, and particularly from about 33 g/10 minutes to about 39 g/10 minutes. The antistat carrier resin can be high melt flow-rate polymer (400 MFR range), whereas the main polymer melt flow rate from vary from for the 10 to 35 MFR. In addition, the main polymer maybe Z-N or metallocene catalyst, and low MFR polymer provide an excellent improvement in physical properties, such as tensile, burst and tear resistance.

In one embodiment, the high melt flow carrier resin contains a homopolymer of polypropylene. The polypropylene contained in the carrier resin can be a Ziegler-Natta catalyzed polymer or, alternatively, can be a metallocene catalyzed polymer. Metallocene catalyzed polymers provide various advantages including offering the possibility of providing a polymer with a relatively low molecular weight distribution. In one embodiment, the carrier resin polymer can be product number 3155 or 3854 marketed by the Exxon Corporation, which is believe to be a polypropylene polymer having a melt flow rate of from 25 g/10 minutes to 39 g/10 minutes. Another suitable melt flow carrier resin is the polypropylene resin available under the name ProFax PH835 (Basell Polyolefins Company, Wilmington, Del.), which has a melt flow rate of 35 g/10 minutes. In the preferred embodiment, a metallocene grade with a MFR between 12 and 15 g/10 minutes, such as available from Basell Corporation as metallocene grade 37-1, can be used.

In still other embodiments, the carrier resin can include an ultra-high melt flow polymer. For example, the ultra-high melt flow polymer can have a melt flow rating of greater than about 200 g/10minutes, such as from about 300 g/10minutes to about 500 g/10minutes, and particularly from about 350 g/10minutes, to about 450 g/10minutes. One suitable example of an ultra-high melt flow carrier resin is available under the name Valtec HH441 (Basell Polyolefins Company, Wilmington, Del.), which has a melt flow rating of about 400 g/10minutes.

The antistatic agent can be mixed or blended with the high melt flow carrier resin prior to being added to the thermoplastic material used to form the continuous filaments of the spunbond layer. For example, the antistatic agent can be added to the carrier resin in an amount up to about 50% by weight, such as from about 5% to about 40% by weight. In one particular embodiment, the antistatic agent and the carrier resin can be blended such that the antistatic agent is present from about 10% to about 30% by weight, such as from about 15% to about 25% by weight. Then, the mixture of the antistatic agent and the carrier resin can be incorporated into the thermoplastic material used to form the continuous filaments of the spunbond layer.

Additionally, a viscosity modifying polymer can be included in the antistatic treatment. The viscosity modifying polymer can be included to help the blooming process and to reduce the level of anti-stat master-batch needed to achieve the desired static dissipation. In one embodiment, the viscosity modifying polymer can be a polybutene ethylene copolymer. One particularly suitable viscosity modifying polymer is available under the name DP8911 M (Basell Polyolefins Company, Wilmington, Del.), which is believed to be a random copolymer of butene-1 with high ethylene content, containing free organic peroxide additives. It is believed that the presence of free organic peroxides in polybutene-1 grade DP8911 M may allow the reduction of melt viscosity in the elevated temperature processing utilized to manufacture the spunbond layer. When included, the viscosity modifying polymer can be present in the antistatic treatment up to about 10% by weight, such as from about 0.1 % to about 5% by weight. In one particular embodiment, the viscosity modifying polymer can be present in the antistatic treatment from about 1 % by weight to about 4% by weight.

Through incorporation of the antistatic treatment additive within the thermoplastic material used to form the continuous filaments of the spunbond layer, at least one antistatic agent is integrally incorporated within the continuous filaments of the resulting spunbond web. As such, the spunbond web has improved antistatic properties, when compared to a similarly constructed web formed without the antistatic treatment additive.

The thermoplastic polymeric material used to form the spunbond web can generally be hydrophobic. In one particular embodiment, the fibers of the nonwoven web are primarily hydrophobic synthetic fibers. For example, greater than about 90% of the fibers of the web can be hydrophobic synthetic fibers, such as greater than about 95%. In one embodiment, substantially all of the fibers of the nonwoven web (i.e., greater than about 98%, greater than about 99%, or about 100%) are hydrophobic synthetic fibers.

Although the spunbond web is made by conventional processes, in some cases it may be either desirable or necessary to stabilize the nonwoven fabric by known means, such as thermal point bonding, through-air bonding, and hydroentangling.

As stated, the nonwoven web can primarily include synthetic fibers, particularly synthetic hydrophobic fibers, such as polyolefin fibers. In one particular embodiment, polypropylene fibers can be used to form the nonwoven web. The polypropylene fibers may have a denier per filament of about 1.5 to 2.5, and the nonwoven web may have a basis weight of about 17 grams per square meter (0.5 ounce per square yard). Furthermore, the nonwoven fabric may include bicomponent or other multicomponent fibers. Exemplary multicomponent nonwoven fabrics are described in U.S. Patent No. 5,382,400 issued to Pike et al., U.S. Publication no. 2003/0118816 entitled "High Loft Low Density Nonwoven Fabrics Of Crimped Filaments And Methods Of Making Same" and U.S. Publication no. 2003/0203162 entitled "Methods For Making Nonwoven Materials On A Surface Having Surface Features And Nonwoven Materials Having Surface Features".

Sheath/core bicomponent fibers where the sheath is a polyolefin such as polyethylene or polypropylene and the core is polyester such as poly(ethylene terephthalate) or poly(butylene terephthalate) can also be used to produce the spunbonded fabrics. The primary role of the polyester core is to provide resiliency and thus to maintain or recover bulk under/after load.

In one particular embodiment, the resulting spunbond layer can be added to other layers to form a nonwoven laminate. For example, the nonwoven laminate contains a meltblown layer and spunbond layer. The techniques used to form the nonwoven laminate generally depend on the desired configuration. In one embodiment, for example, the nonwoven laminate contains a meltblown layer positioned between two spunbond layers to form a spunbond / meltblown / spunbond ("SMS") laminate. Various techniques for forming SMS laminates are described in U.S. Patent Nos. 4,041,203 to Brock et al.; 5,213,881 to Timmons, et al.; 5,464,688 to Timmons, et al.; 4,374,888 to Bornslaeger; 5,169,706 to Collier, et al.; and 4,766,029 to Brock et al., as well as U.S. Patent Application Publication No. 2004/0002273 to Fitting, et al. Of course, the nonwoven laminate may have other configuration and possess any desired number of meltblown and spunbond layers, such as spunbond / meltblown / meltblown / spunbond laminates ("SMMS"), spunbond / meltblown laminates ("SM"), etc.

Referring to Fig. 1, a forming machine 10 is shown for producing an SMS laminate 12 in accordance with the present invention, the SMS laminate having a meltblown layer 32 positioned between spunbond layers 28 and 36. The forming machine 10 includes an endless foraminous surface 14 (e.g., belt) wrapped around rollers 16 and 18 so that the surface 14 is driven in the direction shown by the arrows. The illustrated forming machine 10 employs a first spunbond station 20, a meltblown station 22, and a second spunbond station 24. Alternatively, one or more of the laminate layers may be formed separately, rolled, and later converted to the laminate 12.

The spunbond stations 20 and 24 may each employ one or more conventional extruders. The extrusion temperature may generally vary depending on the type of polymers employed. The molten thermoplastic material which includes the antistatic treatment additive is fed from the extruders through respective polymer conduits to a spinneret (not shown). Spinnerets are well known to those of skill in the art. A quench blower (not shown) may be positioned adjacent the curtain of filaments extending from the spinneret. Air from the quench air blower quenches the filaments extending from the spinneret. The quench air may be directed from one side of the filament curtain or both sides of the filament curtain. Such a process generally reduces the temperature of the extruded polymers at least about 100°C over a relatively short time frame (seconds). This will generally reduce the temperature change needed upon cooling, to preferably be less than 150°C and, in some cases, less than 100°C. The ability to use relatively low extruder temperature also allows for the use of lower quenching temperatures. For example, the quench blower may employ one or more zones operating at a temperature of from about 20°C to about 100°C, and in some embodiments, from about 25°C to about 60°C.

After quenching, the filaments are drawn into the vertical passage of the fiber draw unit by a flow of a gas such as air, from a heater or blower through the fiber draw unit. The flow of gas causes the filaments to draw or attenuate which increases the molecular orientation or crystallinity of the polymers forming the filaments. Fiber draw units or aspirators for use in melt spinning polymers are well known in the art. Suitable fiber draw units for use in the process of the present invention include a linear fiber aspirator of the type shown in U.S. Pat. Nos. 3,802,817 and 3,423,255. Thereafter, the filaments are deposited through the outlet opening of the fiber draw unit and onto the foraminous surface 14 to form the spunbond layers 28.

Referring again to Fig. 1, the meltblown station 22 includes a single die tip, although other meltblown die tips may of course be employed. As the polymer exits the die, high pressure fluid (e.g., heated air) attenuates and spreads the polymer stream into microfibers 30. The microfibers 30 are randomly deposited onto the spunbond layer 28 to form the meltblown layer 32. The distance between the die tip and the foraminous surface 14 is generally small to improve the uniformity of the fiber laydown. For example, the distance may be from about 1 to about 6 centimeters. After the meltblown layer 32 is deposited, the spunbond station 24 deposits spunbond filaments 34 onto the meltblown layer 32 as described above to produce the spunbond layer 36.

Once formed, the nonwoven laminate is then bonded using any conventional technique, such as with an adhesive or autogenously (e.g., fusion and/or self-adhesion of the fibers without an applied external adhesive). Autogenous bonding, for instance, may be achieved through contact of the fibers while they are semi-molten or tacky, or simply by blending a tackifying resin and/or solvent with the aliphatic polyester(s) used to form the fibers. Suitable autogenous bonding techniques may include ultrasonic bonding, thermal bonding, through-air bonding, and so forth.

In Fig. 1, for instance, the SMS laminate passes through a nip formed between a pair of rolls 38 and 40, one or both of which are heated to melt-fuse the fibers. One or both of the rolls 38 and 40 may also contain intermittently raised bond points to provide an intermittent bonding pattern. The pattern of the raised points is generally selected so that the nonwoven laminate has a total bond area of less than about 50% (as determined by conventional optical microscopic methods), and in some embodiments, less than about 30%. Likewise, the bond density is also typically greater than about 100 bonds per square inch, and in some embodiments, from about 250 to about 500 pin bonds per square inch. Such a combination of total bond area and bond density may be achieved by bonding the web with a pin bond pattern having more than about 100 pin bonds per square inch that provides a total bond surface area less than about 30% when fully contacting a smooth anvil roll. In some embodiments, the bond pattern may have a pin bond density from about 250 to about 350 pin bonds per square inch and a total bond surface area from about 10% to about 25% when contacting a smooth anvil roll. Exemplary bond patterns include, for instance, those described in U.S. Patent 3,855,046 to Hansen et al., U.S. Patent No. 5,620,779 to Levy et al., U.S. Patent No. 5,962,112 to Haynes et al., U.S. Patent 6,093,665 to Sayovitz et al., U.S. Design Patent No. 428,267 to Romano et al. and U.S. Design Patent No. 390,708 to Brown. An embodiment of the SMS laminate 12 formed according to the process shown in Fig. 1 has a meltblown layer 32 positioned between two spunbond layers 28 and 36. Further, the laminate 12 also contains a pattern of discrete bond areas.

Once laminated, an outer spunbond layer of the nonwoven laminate is subjected to a particular combination of high-energy treatments to impart alcohol and oil repellency to the laminate without adversely affecting the antistatic properties of the web. First, the outer spunbond layer containing the antistatic agent is subjected to a high-energy treatment such as a glow discharge (GD) from a corona or plasma treatment system. Following the high energy treatment, the outer spunbond layer is subjected to deposition of fluorinated monomers of comonomers which are subsequently irradiated from a radiation source for graft copolymerization on the surface of the fibers of the nonwoven laminate.

The high energy treatment seemingly serves to "clean" the nonwoven laminated from "loose" weak boundary layers made of contaminants and short chain oligomers. The high energy treatment can also generate radicals on the surface of the laminate, which can subsequently enhance surface attachment through covalent bonding of the polymerizing fluorinated monomer(s) being irradiated from the radiation source. By way of example, the high energy treatment may be a radio frequency (RF) plasma treatment. Alternatively, the high energy treatment may be a dielectric barrier corona treatment. Without wishing to be bound by theory, it is believed that exposure of the porous hydrophobic polymer substrate to a high energy treatment results in alterations of the surfaces of the laminate, thereby temporarily raising the surface energy of the substrate and forming transient radicals that can promote interfacial adhesion of the polymerizing fluorinated monomer system (or monomer compounds). These functions are attributed to the plasma ablation of contaminants, the removal of atoms, and the breaking of bonds that can generated free radicals and ionic species. This, in turn, allows the subsequent uniform deposition of fluorinated compounds onto the porous substrate; that is, the porous substrate may be saturated with the fluorinated compounds on its surface and through its porous structure. Thus, the fluorinated compounds can be deposited on the surface of the fibers of the nonwoven web on exposed areas (i.e., the surface and within the pores).

The strength of the high energy treatment may be varied in a controlled manner across at least one dimension of the fibrous web. For example, the strength of the high energy treatment can be readily varied in a controlled manner by known means. For example, a corona apparatus having a segmented electrode may be employed, in which the distance of each segment from the sample to be treated may be varied independently. As another example, a corona apparatus having a gap-gradient electrode system may be utilized; in this case, one electrode may be rotated about an axis which is normal to the length of the electrode. Other methods also may be employed; see, for example, "Fabrication of a Continuous Wettability Gradient by Radio Frequency Plasma Discharge", W. G. Pitt, J. Colloid Interface Sci., 133, No. 1, 223 (1989); and "Wettability Gradient Surfaces Prepared by Corona Discharge Treatment", J. H. Lee, et al., Transactions of the 17th Annual Meeting of the Society for Biomaterials, May 1-5, 1991, page 133, Scottsdale, Ariz.

After the high energy treatment has been completed, the outer spunbond layer is subjected to deposition of monomer compounds that are subsequently grafted to the laminate via irradiation from a radiation source (e.g., electron beam radiation). The monomer compounds are, in one particular embodiment, fluorinated compounds. The monomer deposition process generally involves (1) atomization or evaporation of a liquid fluorinated compound (e.g., a fluorinated monomer, fluorinated polymers, perfluorinated polymers, and the like) in a vacuum chamber, (2) depositing or spraying the fluorinated compound on the nonwoven laminate, and (3) polymerization of the fluorinated compound by exposure to a radiation source, such as electron beam, gamma radiation, or ultraviolet radiation.

Exemplary fluorinated monomers include 2-propenoic acid, 2,2,3,3,4,4,5,5,6,6,7,7,8,8,8-pentadecafluorooctyl ester; 2-propenoic acid, 2-methyl-2,2,3,3,4,4,5,5,6,6,7,7,8,8,8-pentadecafluorooctol ester; 2-propenoic acid, pentafluoroethyl ester; 2-propenoic acid, 2-methyl-pentafluorophenyl ester; 2,3,4,5,6-Pentafluorostyrene; 2-Propenoic acid, 2,2,2-trifluoroethyl ester; and 2-propenoic acid, 2-methyl-2,2,2-trifluoroethyl ester. Other suitable monomers includes those fluoroacrylate monomers having the general structure of:

CH₂=CROCO(CH₂)ₓ(CₙF₂ₙ₊₁)

wherein n is an integer ranging from 1 to 8, x is an integer ranging from 1 to 8, and R is H or an alkyl group with a chain length varying from 1 to 16 carbons. In many instances, the fluoroacrylate monomer may be comprised of a mixture of homologues corresponding to different values of n.

Monomers of this type may be readily synthesized by one of skill in the chemical arts by applying well-known techniques. Additionally, many of these materials are commercially available. The DuPont Corporation of Wilmington, Delaware sells a group of fluoroacrylate monomers under the trade name ZONYL®. These agents are available with different distributions of homologues. More desirably, ZONYL® agents sold under the designation "TA-N" and "TM" may be used in the practice of the present invention.

No matter the particular fluorinated agent used, the fluorinated agent is evaporated (or atomized) and condensed (or sprayed) on the porous substrate according to a monomer deposition process. One particularly suitable monomer deposition process is described by Mikhael, et al. in U.S. Patent No. 7,157,117. In this monomer deposition process, a conventional vacuum chamber is modified to enable the a plasma-field pretreatment, followed by monomer deposition, and then radiation curing of a porous substrate in a continuous process. Typically, the nonwoven web or nonwoven laminate is processed entirely within a vacuum chamber while being spooled continuously between a feed reel and a product reel. The web or laminate can first be passed through a cold compartment to chill it to a temperature sufficiently low to ensure the subsequent cryocondensation of the vaporized fluorinated agent. The web or laminate is then passed through a plasma pretreatment unit and can immediately thereafter (within no more than a few seconds, preferably within milliseconds) pass through a flash evaporator, where it is exposed to the fluorinated agent vapor for the deposition of a thin liquid film over the cold web or laminate. The fluorinated agent film is then polymerized by radiation curing through exposure to an electron beam unit and passed downstream through another (optional) cooled compartment.

Exposure to the electron beam after depositing the fluorinated gas on the surface of the nonwoven web or laminate results in the grafting of the fluorinated agent to the substrate. One exemplary electron beam apparatus is manufactured under the trade designation CB 150 ELECTROCURTAIN® by Energy Sciences Inc. of Wilmington, Mass. This equipment is disclosed in U.S. Pat. Nos. 3,702,412; 3,769,600; and 3,780,308. Although electron beam radiation is generally preferred, other radiations sources could be utilized, such as gamma radiation or ultraviolet radiation.

Generally, the nonwoven laminate may be exposed to an electron beam operating at an accelerating voltage from about 80 kilovolts to about 350 kilovolts, such as from about 80 kilovolts to about 250 kilovolts. In one particular embodiment, the accelerating voltage is about 175 kilovolts. The laminate may be irradiated from about 0.1 million rads (Mrad) to about 20 Mrad, such as from about 0.5 Mrad to about 10 Mrad. Particularly, the substrates may be irradiated from about 1 Mrad to about 5 Mrad.

As stated, the applied radiation causes a reaction between the deposited fluorinated agent and polymers of the nonwoven laminate surface. As a result, the fluorinated agent may become graft copolymerized (or grafted) and/or crosslinked to the polymer fibers of the outer spunbond layer, which integrally contain the antistatic agent. This particular combination of post-treatment adds alcohol and oil repellency to the laminate, while not adversely affecting the antistatic properties of the laminate. Without wishing to be bound by theory, it is believed by the present inventors that the subsequent monomer deposition process which grafts the fluorinated agents onto the polymeric fibers may hide, or otherwise disguise, the integrally contained antistatic agents within the fibers without impairing the function of those antistatic agents. Thus, any alcohol and/or oil applied to the laminate initially contacts the grafted fluorinated agents, which sufficiently provide barrier properties to such liquids. Surprisingly, the antistatic agents integrally positioned within the fibers of the spunbond web can still function to disperse any static or electrical charge, without any apparent lose of static decay capabilities, when compared to the same web prior to the high energy treatment and monomer deposition process.

Accordingly, the present inventors have found that the web can exhibit an alcohol repellency of greater than about 70% (using the alcohol repellency test explained above, an alcohol repellency of 70% means a that a 70% solution of IPA scores a 5), such as greater than about 80%, and greater than about 90%. In one particular embodiment, the web can exhibit an alcohol repellency of about 100%, indicating that the web or laminate exhibits maximum repellency (i.e., a score of 5 on the scale of 0-5) for a 100% solution of IPA.

Additionally, the web or laminate can also retain a high hydrostatic head value, such as greater than about 35 mbars, and particularly greater than about 70 mbars. In some embodiments, the web or laminate can have a hydrostatic head value that is greater than about 100 mbars, such as from about 130 mbars to about 150 mbars.

In one particular embodiment, the treated outer spunbond layer of the web or laminate can have a surface resistivity of about 10¹⁰ to about 10¹¹ ohms per square. In another embodiment, the layer of the web of laminate can have a surface resistivity of less than about 10¹⁰ ohms per square Additionally, the web or laminate can pass the 50% and 90% static decay tests.

If desired, the nonwoven laminate of the present invention may be applied with various other treatments to impart desirable characteristics. For example, the laminate may be treated with surfactants, colorants, antifogging agents, lubricants, and/or antimicrobial agents.

The nonwoven laminate of the present invention may be used in a wide variety of applications. For example, the laminate may be incorporated into a "medical product", such as gowns, surgical drapes, facemasks, head coverings, surgical caps, shoe coverings, sterilization wraps, warming blankets, heating pads, and so forth. Of course, the nonwoven laminate may also be used in various other articles. For example, the nonwoven laminate may be incorporated into an "absorbent article" that is capable of absorbing water or other fluids. Examples of some absorbent articles include, but are not limited to, personal care absorbent articles, such as diapers, training pants, absorbent underpants, incontinence articles, feminine hygiene products (e.g., sanitary napkins), swim wear, baby wipes, mitt wipe, and so forth; medical absorbent articles, such as garments, fenestration materials, underpads, bedpads, bandages, absorbent drapes, and medical wipes; food service wipers; clothing articles; pouches, and so forth. Materials and processes suitable for forming such articles are well known to those skilled in the art. Absorbent articles, for instance, typically include a substantially liquid-impermeable layer (e.g., outer cover), a liquid-permeable layer (e.g., bodyside liner, surge layer, etc.), and an absorbent core. In one embodiment, for example, the nonwoven laminate of the present invention may be used to form an outer cover of an absorbent article.

Although the basis weight of the nonwoven laminate of the present invention may be tailored to the desired application, it generally ranges from about 10 to about 300 grams per square meter ("gsm"), in some embodiments from about 25 to about 200 gsm, and in some embodiments, from about 40 to about 150 gsm.

While the invention has been described in detail with respect to the specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims.

## Claims

1. A method of improving the antistatic properties of a nonwoven web without adversely affecting the alcohol repellant properties of the web, the method being **characterised in** comprising:
combining an antistatic agent with a thermoplastic polymer to form a thermoplastic mixture, wherein the antistatic agent is selected from organic phosphate esters, inorganic salts, quaternary amines, polyethylene glycols, or a salt of an alkyl sulfonate;
forming a spunbond web of continuous filaments from the thermoplastic mixture;
applying a high energy treatment to a surface of the spunbond web;
thereafter, grafting a fluorinated agent to the surface of the spunbond web utilizing a monomer deposition process.

2. A method as in claim 1, wherein the antistatic agent is provided in a high melt flow carrier resin having a melt flow rating of greater than about 10 g/10 minutes.

3. A method as in claim 2, wherein the high melt flow carrier resin comprises a homopolymer of polypropylene, preferably a metallocene catalyzed homopolymer of polypropylene.

4. A method as in claim 1, wherein a viscosity modifying polymer is also combined with the antistatic agent and the thermoplastic polymer to form the thermoplastic mixture, wherein the viscosity modifying polymer preferably comprises a polybutene ethylene copolymer, and preferably wherein the viscosity modifying polymer further comprises free organic peroxide additives.

5. A method as in claim 1, wherein the high energy treatment comprises plasma treatment.

6. A method as in claim 1, wherein the monomer deposition process comprises the steps of:
evaporating a liquid fluorinated agent in a vacuum chamber to form a fluorinated agent gas;
depositing the fluorinated agent gas on a surface of the spunbond web; and
polymerizing the fluorinated agent on the surface of the spunbond web by exposure to a radiation source, wherein the fluorinated agent preferably comprises a fluoroacrylate monomer.

7. A method as in claim 6, wherein the step of polymerizing the fluorinated agent on the surface of the spunbond web by exposure to a radiation source comprises exposing the fluorinated agent on the surface of the spunbond web to an electron beam.

8. A method as in claim 1, wherein the monomer deposition process comprises the steps of:
spraying the fluorinated agent on a surface of the spunbond web; and
polymerizing the fluorinated agent on the surface of the spunbond web by exposure to a radiation source.

9. A method as in claim 1, further comprising the step of laminating the spunbond web to a second nonwoven web.

10. The method of claim 1, wherein a viscosity modifying polymer is mixed with the antistatic agent and thermoplastic polymer to form the thermoplastic mixture, wherein the antistatic agent is provided in a high melt flow carrier resin comprising a homopolymer of polypropylene, and wherein the viscosity modifying polymer comprises a polybutene ethylene copolymer;
and wherein the method further comprises laminating the spunbond web to a meltblown web to form a nonwoven laminate, wherein the spunbond web defines an exposed surface of the nonwoven laminate;
thereafter applying the high energy treatment to the exposed surface, the high energy treatment being a plasma treatment; and
grafting the fluorinated agent to the surface of the spunbond web utilizing a monomer deposition process comprising the steps of evaporating a liquid fluorinated agent in a vacuum chamber to form a fluorinated agent gas; depositing the fluorinated agent gas on a surface of the spunbond web; and polymerizing the fluorinated agent on the surface of the spunbond web by exposure to electron beam radiation.

11. A method as in claim 10, wherein the viscosity modifying polymer further comprises free organic peroxide additives.

12. A method as in claim 10, wherein the fluorinated agent comprises a fluoroacrylate monomer.

## Patentansprüche

1. Verfahren zum Verbessern der antistatischen Eigenschaften einer Vliesbahn ohne nachteilig die Alkohol abstoßenden Eigenschaften der Bahn zu beeinflussen, wobei das Verfahren charakterisiert ist durch Umfassen:
Kombinieren eines antistatischen Mittels mit einem thermoplastischen Polymer, um eine thermoplastische Mischung zu bilden, wobei das antistatische Mittel ausgewählt ist aus organischen Phosphatestern, anorganischen Salzen, quaternären Aminen, Polyethylenglykolen oder einem Salz eines Alkylsulfonats;
Bilden einer Spunbond-Bahn aus kontinuierlichen Filamenten aus der thermoplastischen Mischung;
Anwenden einer Hochenergiebehandlung auf eine Oberfläche der Spunbond-Bahn;
danach, Pfropfen eines fluorisierten Mittels auf die Oberfläche der Spunbond-Bahn unter Verwendung eines Monomer-Abscheidungsverfahrens.

2. Verfahren gemäß Anspruch 1, wobei das antistatische Mittel in einem Hochschmelzfluss-Trägerharz bereitgestellt ist, welches eine Schmelzflussrate von mehr als ungefähr 10 g/10 Minuten aufweist.

3. Verfahren gemäß Anspruch 2, wobei das Hochschmelzfluss-Trägerharz ein Homopolymer aus Polypropylen umfasst, vorzugsweise ein Metallocen-katalysiertes Homopolymer aus Polypropylen.

4. Verfahren gemäß Anspruch 1, wobei ein Viskosität modifizierendes Polymer auch kombiniert wird mit dem antistatischen Mittel und dem thermoplastischen Polymer, um die thermoplastische Mischung zu bilden, wobei das Viskosität modifizierende Polymer vorzugsweise ein Polybuten-Ethylen-Copoylmer umfasst, und wobei das Viskosität modifizierende Polymer des Weiteren vorzugsweise freie organische Peroxidzusätze umfasst.

5. Verfahren gemäß Anspruch 1, wobei die Hochenergiebehandlung eine Plasma-Behandlung umfasst.

6. Verfahren gemäß Anspruch 1, wobei das Monomer-Abscheidungsverfahren die Schritte umfasst:
Evaporieren eines flüssigen fluorisierten Mittels in einer Vakuumkammer, um ein fluorisiertes Gasmittel zu bilden;
Abscheiden des fluorisierten Gasmittels auf eine Oberfläche der Spunbond-Bahn; und Polymerisieren des fluorisierten Mittels auf der Oberfläche der Spunbond-Bahn durch Aussetzen einer Strahlungsquelle, wobei das fluorisierte Mittel vorzugsweise ein Fluoracrylat-Monomer umfasst.

7. Verfahren gemäß Anspruch 6, wobei der Schritt des Polymerisierens des fluorisierten Mittels auf der Oberfläche der Spunbond-Bahn durch Aussetzen einer Strahlungsquelle das einem Elektronenstrahl Aussetzen des fluorisierten Mittels auf der Oberfläche der Spunbond-Bahn umfasst.

8. Verfahren gemäß Anspruch 1, wobei das Monomer-Abscheidungsverfahren die Schritte umfasst:
Sprühen des fluorisierten Mittels auf eine Oberfläche der Spunbond-Bahn; und
Polymerisieren des fluorisierten Mittels auf der Oberfläche der Spunbond-Bahn durch Aussetzen einer Strahlungsquelle.

9. Verfahren gemäß Anspruch 1, welches des Weiteren den Schritt des Laminierens der Spunbond-Bahn auf eine zweite Vliesbahn umfasst.

10. Verfahren gemäß Anspruch 1, wobei ein Viskosität modifizierendes Polymer mit dem antistatischen Mittel und dem thermoplastischen Polymer gemischt wird, um die thermoplastische Mischung zu bilden, wobei das antistatische Mittel in einem Hochschmelzfluss-Trägerharz bereitgestellt ist, welches ein Homopolymer aus Polypropylen umfasst, und wobei das Viskosität modifizierende Polymer ein Polybuten-Ethylen-Copolymer umfasst;
und wobei das Verfahren des Weiteren das Laminieren der Spunbond-Bahn auf eine Meltblown-Bahn umfasst, um ein Vlieslaminat zu bilden, wobei die Spunbond-Bahn eine exponierte Oberfläche des Vlieslaminats bestimmt;
danach Anwenden der Hochenergiebehandlung auf die exponierte Oberfläche, wobei die Hochenergiebehandlung eine Plasmabehandlung ist; und
Pfropfen des fluorisierten Mittels auf die Oberfläche der Spunbond-Bahn unter Verwendung eines Monomer-Abscheidungsverfahrens, welches die Schritte umfasst des Evaporierens eines flüssigen fluorisierten Mittels in einer Vakuumkammer, um ein fluorisiertes Gasmittel zu bilden; des Abscheidens des fluorisierten Gasmittels auf eine Oberfläche der Spunbond-Bahn; und des Polymerisierens des fluorisierten Mittels auf der Oberfläche der Spunbond-Bahn durch Aussetzen einer Elektronenstrahlbestrahlung.

11. Verfahren gemäß Anspruch 10, wobei das Viskosität modifizierende Polymer des Weiteren freie organische Peroxidzusätze umfasst.

12. Verfahren gemäß Anspruch 10, wobei das fluorisierte Mittel ein Fluoracrylat-Monomer umfasst.

## Revendications

1. Procédé d'amélioration des propriétés antistatiques d'un voile non tissé sans effets négatifs sur les propriétés de répulsion d'alcool du voile, le procédé étant **caractérisé en ce qu'**il comprend :
la combinaison d'un agent antistatique avec un polymère thermoplastique pour former un mélange thermoplastique, dans lequel l'agent antistatique est choisi parmi les esters de phosphate organique, les sels inorganiques, les amines quaternaires, les poly(éthylène glycols) ou un sel d'un alkyl sulfonate ;
la formation d'un voile non tissé par filage direct de filaments continus à partir du mélange thermoplastique ;
l'application d'un traitement de haute énergie à une surface du voile non tissé par filage direct ;
ensuite, la greffe d'un agent fluoré sur la surface du voile non tissé par filage direct en utilisant un processus de dépôt de monomère.

2. Procédé selon la revendication 1, dans lequel l'agent antistatique est fourni dans une résine porteuse à haut indice de fluage ayant un indice de fluage de plus d'environ 10 g/10 minutes.

3. Procédé selon la revendication 2, dans lequel la résine porteuse à haut indice de fluage comprend un homopolymère de poly(propylène), de préférence un homopolymère de poly(propylène) catalysé par métallocène.

4. Procédé selon la revendication 1, dans lequel un polymère modifiant la viscosité est également combiné avec l'agent antistatique et le polymère thermoplastique pour former le mélange thermoplastique, dans lequel le polymère modifiant la viscosité comprend de préférence un copolymère de poly(butène éthylène), et de préférence dans lequel le polymère modifiant la viscosité comprend en outre des additifs de peroxyde organique libre.

5. Procédé selon la revendication 1, dans lequel le traitement de haute énergie comprend un traitement au plasma.

6. Procédé selon la revendication 1, dans lequel le processus de dépôt de monomère comprend les étapes de :
évaporation d'un agent fluoré liquide dans une chambre sous vide pour former un agent gazeux fluoré ;
dépôt de l'agent gazeux fluoré sur une surface du voile non tissé par filage direct ; et
polymérisation de l'agent fluoré sur la surface du voile non tissé par filage direct par exposition à une source de rayonnement, dans lequel l'agent fluoré comprend de préférence un monomère de fluoroacrylate.

7. Procédé selon la revendication 6, dans lequel l'étape de polymérisation de l'agent fluoré sur la surface du voile non tissé par filage direct par exposition à une source de rayonnement comprend l'exposition de l'agent fluoré sur la surface du voile non tissé par filage direct à un faisceau d'électrons.

8. Procédé selon la revendication 1, dans lequel le processus de dépôt de monomère comprend les étapes de :
pulvérisation de l'agent fluoré sur une surface du voile non tissé par filage direct ; et
polymérisation de l'agent fluoré sur la surface du voile non tissé par filage direct par exposition à une source de rayonnement.

9. Procédé selon la revendication 1, comprenant en outre l'étape de stratification du voile non tissé par filage direct sur un second voile non tissé.

10. Procédé selon la revendication 1, dans lequel un polymère modifiant la viscosité est mélangé avec l'agent antistatique et le polymère thermoplastique pour former le mélange thermoplastique, dans lequel l'agent antistatique est fourni dans une résine porteuse à haut indice de fluage comprenant un homopolymère de poly(propylène), et dans lequel le polymère modifiant la viscosité comprend un copolymère de poly(butène éthylène) ;
et dans lequel le procédé comprend en outre la stratification du voile non tissé par filage direct sur un voile obtenu par extrusion-soufflage pour former un stratifié non tissé, dans lequel le voile non tissé par filage direct définit une surface exposée du stratifié non tissé ;
puis l'application du traitement de haute énergie à la surface exposée, le traitement de haute énergie étant un traitement au plasma ; et
le greffage de l'agent fluoré sur la surface du voile non tissé par filage direct en utilisant un processus de dépôt de monomère comprenant les étapes d'évaporation d'un agent fluoré liquide dans une chambre sous vide pour former un agent gazeux fluoré ; le dépôt de l'agent gazeux fluoré sur une surface du voile non tissé par filage direct ; et la polymérisation de l'agent fluoré sur la surface du voile non tissé par filage direct par exposition à un rayonnement de faisceau d'électrons.

11. Procédé selon la revendication 10, dans lequel le polymère modifiant la viscosité comprend en outre des additifs de peroxyde organique libre.

12. Procédé selon la revendication 10, dans lequel l'agent fluoré comprend un monomère de fluoroacrylate.
